Europäisches Patentamt

European Patent Office

Office européen des brevets

(11) Veröffentlichungsnummer: **0 413 919 A2**

## (12) EUROPÄISCHE PATENTANMELDUNG

(21) Anmeldenummer: 90111819.0

(22) Anmeldetag: 22.06.90

(51) Int. Cl.5: **G02F 1/133**, H01R 23/68

(30) Priorität: 23.08.89 DE 3927752

(43) Veröffentlichungstag der Anmeldung:
27.02.91 Patentblatt 91/09

(84) Benannte Vertragsstaaten:
**BE DE FR NL**

(71) Anmelder: **STOCKO Metallwarenfabriken Henkels und Sohn GmbH & Co**
**Kirchhofstrasse 52a**
**D-5600 Wuppertal 1(DE)**

(72) Erfinder: **Klatt, Dieter**
**Am Schlagbaum 27**
**D-5603 Wülfrath(DE)**
Erfinder: **Pellizari, Dirk**
**Kirchfelderweg 46 K**
**D-5600 Wuppertal 17(DE)**

(74) Vertreter: **Patentanwälte Dipl.-Ing. Alex Stenger Dipl.-Ing. Wolfram Watzke Dipl.-Ing. Heinz J. Ring**
**Kaiser-Friedrich-Ring 70**
**D-4000 Düsseldorf 11(DE)**

(54) Displaykontaktierung.

(57) Eine Vorrichtung zum elektrischen Kontaktieren der elektrischen Anschlüsse 3 eines Displayelements 2, beispielsweise eines leistenartigen LCD-Anzeigendisplays oder eines plattenförmigen LCD-Bildschirmes mit den dazu korrespondierenden elektrischen Anschlüssen einer Leiterplatte 1 unter gleichzeitiger mechanischer Befestigung sieht einen starren, leistenförmigen Isolationskörper 4 aus Kunststoff vor, an dessen Seitenwänden 5 versetzt zueinander sowie abwechselnd an der einen und der anderen Seitenwand 5 über dessen Länge Blattfedern 6 angeordnet sind, auf deren oberen gekrümmten Enden das Displayelement 2 unter Herstellung des elektrischen Kontaktes aufliegt. Die Blattfedern 6 sind dabei entweder in der SMD-Technik mit den Leiterbahnen auf der Leiterplatte 1 verbunden oder aber auch durch die Durchlöttechnik.

Fig.1

## DISPLAYKONTAKTIERUNG

Die Erfindung betrifft eine Vorrichtung zum elektrischen Kontaktieren der in einer Reihe nebeneinander liegenden, elektrischen Anschlüsse eines Displayelements, beispielsweise eines leistenartigen LCD-Anzeigendisplays oder eines plattenförmigen LCD-Bildschirmes mit den dazu korrespondierenden elektrischen Anschlüssen einer Leiterplatte oder einer sonstigen Trägerplatte unter gleichzeitiger mechanischer Befestigung, mit einem leistenförmigen Isolationskörper, auf oder in dem zueinander parallele elektrische Leiter angeordnet sind, die jeweils mit ihrem einen Ende mit dem zugehörigen Anschluß der Leiterplatte oder sonstigen Trägerplatte elektrisch kontaktiert sind und auf deren anderem Ende ebenfalls unter elektrischer Kontaktierung des zugehörigen Anschlusses des Displayelements dieses federnd aufliegt, sowie mit einem aufsetzbaren Andruckrahmen zur mechanischen Befestigung des Displayelements.

In vielen elektronischen Geräten werden Displayelemente verwendet. Bei diesen Displayelementen handelt es sich beispielsweise um LCD-Anzeigendisplays wie bei elektronischen Schreibmaschinen, um plattenförmige LCD-Bildschirme für Audio/Video und Spielcomputer, um LCD-Bildschirme für tragbare Personalcomputer (Laptops), wobei sich diese Reihe beliebig fortsetzen läßt.

Aus der DE-05 27 55 254 ist eine Vorrichtung zum elektrischen Kontaktieren der in einer Reihe nebeneinander liegenden elektrischen Anschlüsse eines Displayelements in vorm einer Flüssigkristallanzeige bei einer Quarzarmbanduhr der eingangs angegebenen Art bekannt. Zu diesem Zweck ist beidseits des Displayelements jeweils ein leistenförmiger Isolationskörper angeordnet, in dem zueinander parallele elektrische Leiter eingebettet sind. Deren freie Enden ragen dabei frei auskragend über den jeweiligen Isolationskörper, wobei das Displayelement unter elektrischer Kontaktierung des zugehörigen Anschlusses federnd auf den elektrischen Leitern aufliegt. Die endgültige mechanische Befestigung des Displayelements erfolgt dann durch einen aufsetzbaren Andruckrahmen des Uhrgehäuses.

Bei dieser bekannten elektrischen Kontaktierungsvorrichtung für Displayelemente entstehen Kontaktierungsprobleme dann, wenn der Rasterabstand zwischen den elektrischen Anschlüssen des Displayelements zu gering wird, wenn er beispielsweise 0,35 mm beträgt. Der Abstand der elektrischen Leiter am Isolationskörper läßt sich nämlich nicht beliebig verringern, da sie einen gewissen Mindestabstand zur Vermeidung von Kontaktbrücken aufweisen müssen.

Aus dem DE-GM 87 05 715 ist eine Kontaktierungsvorrichtung für LC-Displays bekannt. Zu diesem Zweck ist ein Rahmen auf einer Leiterplatte angeordnet. Auf diesem Rahmen befindet sich das Displayelement. Zur Herstellung der elektrischen Verbindung zwischen den elektrischen Anschlüssen des Displayelements mit den entsprechenden Bahnen der Leiterplatte sind in einer Reihe nebeneinander liegend Kontaktfedern angeordnet, die mittels einer Kontaktfederhalterung gehalten werden und die mit ihren freien Enden jeweils oberseitig auf den entsprechenden elektrischen Anschlüssen des Displayelements aufliegen.

Auch hier ist der Rasterabstand der elektrischen Anschlüsse des Displayelements beschränkt, da die elektrischen Leiter allesamt nebeneinander liegen und diese einen gewissen Mindestabstand benötigen.

Ausgehend von einer elektrischen Kontaktierungsvorrichtung für Displayelemente der eingangs angegebenen Art liegt der Erfindung die **Aufgabe** zugrunde, auch bei sehr eng nebeneinander liegenden elektrischen Anschlüssen des Displayelements eine sichere Kontaktierung mit den elektrischen Leitern des Isolationskörpers zu erzielen.

Als technische **Lösung** wird mit der Erfindung vorgeschlagen, daß die elektrischen Leiter abwechselnd an der einen und der anderen Seitenwand des leistenförmigen Isolationskörpers über dessen Länge versetzt zueinander an diesem angeordnet sind.

Eine nach dieser technischen Lehre ausgebildete Vorrichtung zum elektrischen Kontaktieren der elektrischen Anschlüsse eines Displayelements hat den Vorteil, daß auch Displayelemente mit einem sehr geringen Rasterabstand von beispielsweise 0,35 mm problemlos mit den elektrischen Leitern des leistenförmigen Isolationskörpers kontaktiert werden können, da der Abstand der elektrischen Leiter auf jeder Seitenwand dem doppelten Rasterabstand entspricht.

In einer bevorzugten Weiterbildung des leistenförmigen Isolationskörpers weist dieser einen im wesentlichen rechteckigen oder trapezförmigen Querschnitt auf, wobei der trapezförmige Querschnitt bevorzugt ist.

Vorzugsweise sind die elektrischen Leiter auf dem Isolationskörper dadurch befestigt, daß sie festgeklebt oder verstemmt sind. Grundsätzlich ist es aber auch denkbar, die elektrischen Leiter in dem Isolationskörper in einem Spritzvorgang einzubetten, wenn dieser vorzugsweise aus Kunststoff besteht.

In einer bevorzugten Weiterbildung sind die elektrischen Leiter jeweils als Blattfedern oder als Drahtfedern ausgebildet. Diese sind dabei im Bereich des Displayelements vorzugsweise derart gebogen, daß das Displayelement auf den Außenkrümmungen federnd aufliegt. Dadurch ist ein technisch einfacher elektrischer Leiter geschaffen, der darüber hinaus auf überaus zuverlässige Weise die elektrische Verbindung zwischen den elektrischen Anschlüssen des Displayelements einerseits und der Leiterplatte andererseits herstellt. Insbesondere die Blattfedern besitzen ein sehr gutes Federverhalten, um einen optimalen elektrischen Kontakt mit den entsprechenden elektrischen Anschlüssen des Displayelements herzustellen. Das gleiche gilt für die aus Draht gebogenen Federn, die sich zudem sehr einfach herstellen lassen.

In einer ersten Alternative zum Befestigen des Isolationskörpers mit seinen elektrischen Leitern an der Leiterplatte sind die einen Enden der elektrischen Leiter jeweils durch Durchbrechungen in der Leiterplatte hindurchgeführt und mit dieser verlötet. Bei dieser Durchlöttechnik ist es möglich, einseitig kaschierte Leiterplatten zu verwenden. Mittels des Lötvorganges können somit die Isolationsleiste sowie alle restlichen elektronischen Bauteile der Leiterplatte kontaktiert werden.

In einer zweiten Alternative sind die einen Enden der elektrischen Leiter jeweils in der SMD-Technik auf der Leiterplatte befestigt. Auch hierdurch ist eine sichere Kontaktierung sowie Befestigung mit der Leiterplatte gewährleistet.

Zwei Ausführungsbeispiele einer erfindungsgemäßen Vorrichtung zum elektrischen Kontaktieren sowie zum Befestigen eines Displayelements auf einer Leiterplatte wird nachfolgend anhand der schematischen Zeichnungen beschrieben. In diesen zeigt:

Fig. 1 einen schematischen Querschnitt durch eine erste Ausführungsform der Vorrichtung;

Fig. 2 eine schematische Draufsicht auf die Vorrichtung in Fig. 1;

Fig. 3 eine schematische Seitenansicht des leistenförmigen Isolationskörpers mit an den Seitenwänden befestigten Blattfedern der Vorrichtung in Fig. 1;

Fig. 4 einen schematischen Querschnitt durch eine zweite Ausführungsform der Vorrichtung;

Fig. 5 eine schematische Draufsicht auf die Vorrichtung in Fig. 4;

Fig. 6 eine schematische Seitenansicht des leistenförmigen Isolationskörpers mit an den Seitenwänden befestigten Blattfedern der Vorrichtung in Fig. 4.

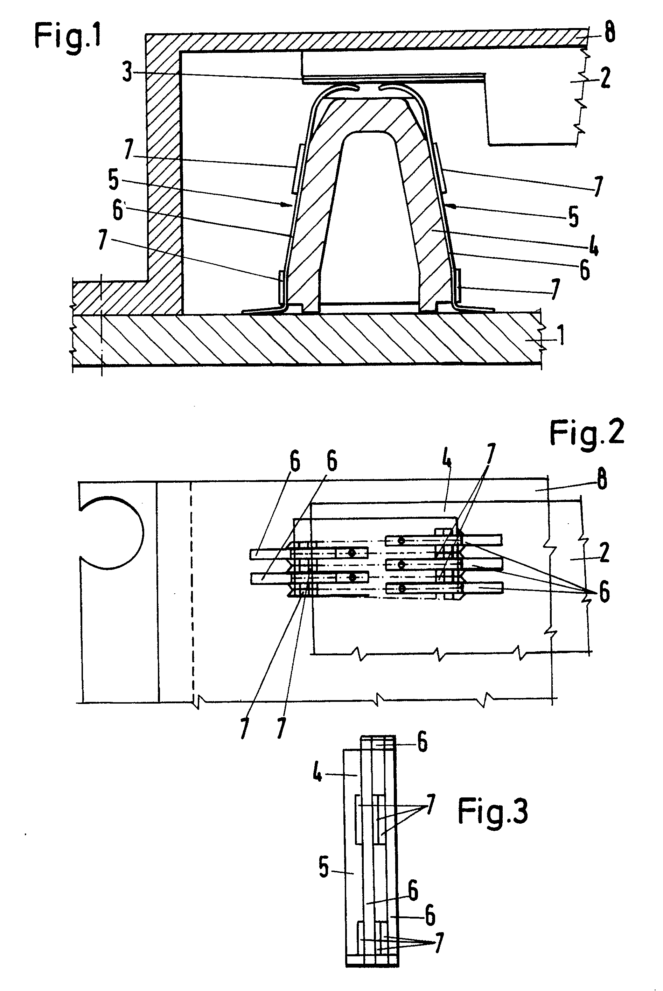

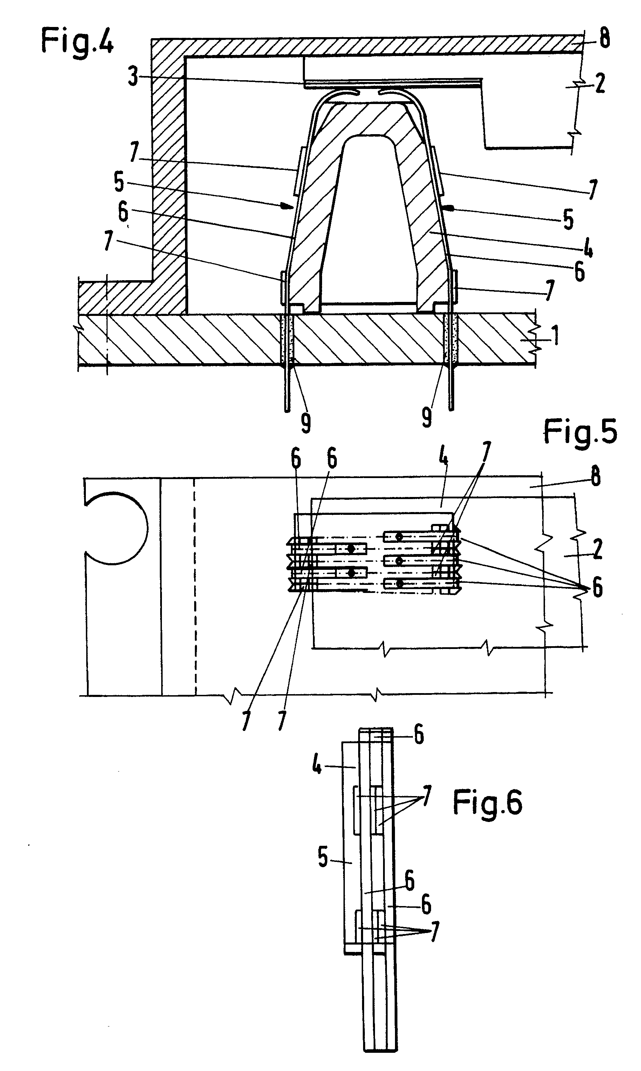

In den Fig. 1 bis 3 ist eine erste Ausführungsform und in den Fig. 4 bis 6 eine zweite Ausführungsform einer Vorrichtung zum Befestigen und elektrischen Kontaktieren eines Displayelements mit einer Leiterplatte dargestellt.

Bei der ersten Ausführungsform ist auf einer Leiterplatte 1 ein Displayelement 2 mechanisch befestigt sowie vor allem elektrisch kontaktiert. Die Leiterplatte 1 ist zu diesem Zweck auf ihrer Oberseite mit (nicht dargestellten) elektrischen Anschlüssen in Form von Leiterbahnen versehen. Dazu korrespondierend weist das Displayelement an seiner Unterseite elektrische Anschlüsse 3 in Form von Leiterbahnen auf, welche parallel zueinander über die Länge des Displayelements 2 angeordnet sind, und zwar entsprechend den Leiterbahnen auf der darunter befindlichen Leiterplatte 1.

Um den elektrischen Kontakt zwischen den Leiterbahnen der Leiterplatte 1 einerseits und den Leiterbahnen des Displayelements 2 andererseits herzustellen, ist ein leistenförmiger Isolationskörper 4 vorgesehen, der ein im wesentlichen trapezförmiges Querschnittsprofil aufweist. An den beiden Seitenwänden 5 dieses vorzugweise aus Kunststoff gefertigten Isolationskörpers 4 sind elektrische Leiter in Form von Blattfedern 6 befestigt. Diese Blattfedern 6 sind parallel zueinander ausgerichtet und an den Seitenwänden 5 des Isolationskörpers 4 dadurch befestigt, daß dieser mit Vorsprüngen 7 versehen ist, zwischen die die Blattfedern 6 hineingepreßt werden. Das besondere bei der Befestigung der Blattfedern 6 am Isolationskörper 4 ist dabei, daß die Blattfedern 6 abwechselnd an der einen und der anderen Seitenwand 5 des Isolationskörpers 4 derart versetzt zueinander angeordnet sind, daß der Abstand der Blattfedern 6 an jeder der beiden Seitenwände 5 dem doppelten Rastermaß entspricht, so daß auf diese Weise die Breite dar Blattfedern 6 ungefähr dem Rastermaß entsprechen kann, ohne daß einander benachbarte Blattfedern 6 sich gegenseitig berühren. Wesentlich ist dabei, daß die oberen, gekrümmten Enden der Blattfedern 6 nicht ineinandergreifen, sondern einen streifenförmigen Abstand zueinander aufweisen, wie in der Draufsicht gemäß Fig. 3 zu erkennen ist.

Die Befestigung der Blattfedern 6'und dabei des Isolationskörpers 4 auf der Leiterplatte 1 unter jeweiliger elektrischer Kontaktierung der Leiterbahnen auf der Leiterplatte 1 erfolgt in der sogenannten SMD-Technik, wobei zu diesem Zweck die unteren Enden der Blattfedern 6 nach außen hin abgewinkelt sind. Weiterhin ist in Fig. 1 erkennbar, daß die oberen Enden der Blattfedern 6 bogenförmig gekrümmt sind. Auf dieser Außenkrümmung der Blattfedern 6 liegt das Displayelement 2 mit seinen elektrischen Anschlüssen 3 in Form von Leiterbahnen derart auf, daß diese Leiterbahnen exakt auf den korrespondierenden und zu kontaktierenden Blattfedern 6 aufsitzen. Auf diese Weise ist zwischen den elektrischen Anschlüssen 3 des Displayelements 2 über die Blattfedern 6 der elektrische Kontakt zu den Leiterbahnen auf der Leiterplatte 1 hergestellt.

Zur Fixierung des Displayelements 2 dient ein Andruckrahmen 8, der mittig eine Aussparung für das Displayfeld aufweist. Dieser Andruckrahmen 8 drückt das Displayelement 2 entgegen der Kraft der Blattfedern 6 nach unten. Die Befestigung des Andruckrahmens 8 auf der Leiterplatte 1 kann dann beispielsweise durch Verschrauben erfolgen.

Bei der zweiten Ausführungsform in den Fig. 4 bis 6 ist eine entsprechende Anordnung vorgesehen. Der einzige Unterschied zu der in den Fig. 1 bis 3 dargestellten ersten Ausführungsform liegt lediglich in der Kontaktierung der Blattfedern 6 auf der Leiterplatte 1. Statt der SMD-Technik ist hier die Durchlöttechnik vorgesehen, wobei zu diesem Zweck die Leiterplatte mit Durchbrechungen 9 versehen ist, durch die hindurch die Lötbeine bildenden unteren Enden der Blattfedern 6 hindurchgesteckt und mit der Leiterplatte 1 verlötet sind.

## Bezugszeichenliste

1 Leiterplatte
2 Displayelement
3 elektrischer Anschluß
4 Isolationskörper
5 Seitenwand
6 Blattfeder
7 Vorsprung
8 Andruckrahmen
9 Durchbrechung

## Ansprüche

1. Vorrichtung zum elektrischen Kontaktieren der in einer Reihe nebeneinander liegenden, elektrischen Anschlüsse (3) eines Displayelements (2), beispielsweise eines leistenartigen LCD-Anzeigendisplays oder eines plattenförmigen LCD-Bildschirmes mit den dazu korrespondierenden elektrischen Anschlüssen einer Leiterplatte (1) oder einer sonstigen Trägerplatte unter gleichzeitiger mechanischer Befestigung, mit einem leistenförmigen Isolationskörper (4), auf oder in dem zueinander parallele elektrische Leiter (6) angeordnet sind, die jeweils mit ihrem einen Ende mit dem zugehörigen Anschluß der Leiterplatte (1) oder sonstigen Trägerplatte elektrische kontaktiert sind und auf deren anderem Ende ebenfalls unter elektrischer Kontaktierung des zugehörigen Anschlusses (3) des Displayelements (2) dieses federnd aufliegt, sowie mit einem aufsetzbaren Andruckrahmen (8) zur mechanischen Befestigung des Displayelements (2),
**dadurch gekennzeichnet,**
daß die elektrischen Leiter (6) abwechselnd an der einen und der anderen Seitenwand (5) des leistenförmigen Isolationskörpers (4) über dessen Länge versetzt zueinander an diesem angeordnet sind.

2. Vorrichtung nach Anspruch 1, dadurch gekennzeichnet, daß der leistenförmige Isolationskörper (4) einen im wesentlichen rechteckigen oder trapezförmigen Querschnitt aufweist.

3. Vorrichtung nach Anspruch 1 oder 2, dadurch gekennzeichnet, daß die elektrischen Leiter (6) auf dem Isolationskörper (4) festgeklebt oder verstemmt sind.

4. Vorrichtung nach einem der Ansprüche 1 bis 3, dadurch gekennzeichnet, daß die elektrischen Leiter jeweils als Blattfedern (6) oder als Drahtfedern ausgebildet sind.

5. Vorrichtung nach einem der Ansprüche 1 bis 4, dadurch gekennzeichnet, daß die einen Enden der elektrischen Leiter (6) jeweils durch Durchbrechungen (9) in der Leiterplatte hindurchgeführt und mit dieser verlötet sind.

6. Vorrichtung nach einem der Ansprüche 1 bis 4, dadurch gekennzeichnet, daß die einen Enden der elektrischen Leiter (6) jeweils in der SMD-Technik auf der Leiterplatte (1) befestigt sind.

Fig.1

Fig.2

Fig.3

# Fig.4

# Fig.5

# Fig.6